(19) Europäisches Patentamt
European Patent Office
Office européen des brevets

(11) EP 2 319 897 B1

(12) **EUROPÄISCHE PATENTSCHRIFT**

(45) Veröffentlichungstag und Bekanntmachung des Hinweises auf die Patenterteilung:
**20.06.2012 Patentblatt 2012/25**

(51) Int Cl.:
***C09K 19/20** (2006.01)* ***C09K 19/42** (2006.01)*

(21) Anmeldenummer: **10013534.2**

(22) Anmeldetag: **12.10.2010**

(54) **Flüssigkristalline Verbindungen**

Liquid crystal compounds

Composés à base de cristaux liquides

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.11.2009 DE 102009051904**

(43) Veröffentlichungstag der Anmeldung:
**11.05.2011 Patentblatt 2011/19**

(73) Patentinhaber: **Merck Patent GmbH**
**64293 Darmstadt (DE)**

(72) Erfinder:
- **Lietzau, Lars, Dr.**
  **64295 Darmstadt (DE)**
- **Binder, Werner**
  **64807 Dieburg (DE)**
- **Manabe, Atsutaka**
  **64625 Bensheim (DE)**
- **Haensel, Helmut, Dr.**
  **64367 Muehltal (DE)**

(56) Entgegenhaltungen:
**WO-A1-2008/105286** **DE-A1-102004 029 429**
**JP-A- 2005 120 208** **JP-A- 2009 074 050**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 319 897 B1

## Beschreibung

Die vorliegende Erfindung betrifft neue chemische Verbindungen mit fünf oder sechs Benzolringen und zwei verbrückenden Einheiten zwischen diesen Ringen, wobei mindestens eine dieser Einheiten eine $-CF_2O-$Brücke darstellt. Die Verbindung betrifft außerdem flüssigkristalline Medien und diese Medien enthaltende Hochfrequenzbauteile, insbesondere Antennen, speziell für den Gigahertzbereich. Die flüssigkristallinen Medien dienen beispielsweise zur Phasenschiebung von Mikrowellen für abstimmbare "phased-array"-Antennen.

Flüssigkristalline Medien werden seit längerem in elektrooptischen Anzeigen (Liquid Crystal Displays - LCDs) genutzt, um Informationen anzuzeigen. Verbindungen mit 5 Ringen und einer $-CF_2O-$ Brücke werden schon für Anzeigevorrichtungen vorgeschlagen, z.B. in den Druckschriften JP 2009-074050 und WO 2008/105286.

In neuerer Zeit werden flüssigkristalline Medien jedoch auch für die Verwendung in Komponenten, bzw. in Bauteilen, für die Mikrowellentechnik vorgeschlagen, wie z.B. in DE 10 2004 029 429 A und in JP 2005-120208 (A).

Eine technisch wertvolle Anwendung der flüssigkristallinen Medien in der Hochfrequenztechnik beruht auf ihrer Eigenschaft, dass sie sich durch eine variable Spannung in ihren dielektrischen Eigenschaften steuern lassen, besonders für den Gigahertzbereich. Somit lassen sich abstimmbare Antennen konstruieren, die keine beweglichen Teile beinhalten (A. Gaebler, A. Moessinger, F. Goelden, et al., "Liquid Crystal-Reconfigurable Antenna Concepts for Space Applications at Microwave and Millimeter Waves," International Journal of Antennas and Propagation, vol. 2009, Article ID 876989, 7 Seiten, 2009. doi:10.1155/2009/876989). DE 10 2004 029 429 A beschreibt die Anwendung von herkömmlichen Flüssigkristallmedien in der Mikrowellentechnik, unter anderem in Phasenschiebern. Dort werden bereits flüssigkristalline Medien bezüglich ihrer Eigenschaften im entsprechenden Frequenzbereich untersucht.

Die bisher bekannten Zusammensetzungen oder Einzelverbindungen sind jedoch in der Regel mit Nachteilen behaftet. Die meisten von ihnen führen, neben anderen Mängeln, zu unvorteilhaft hohen Verlusten und/oder unzureichenden Phasenverschiebungen bzw. zu geringer Materialgüte.

Für die Anwendung in der Hochfrequenztechnik werden flüssigkristalline Medien mit besonderen, bislang eher ungewöhnlichen, ungebräuchlichen Eigenschaften, bzw. Kombinationen von Eigenschaften benötigt.

Somit sind neue Komponenten für flüssigkristalline Medien mit verbesserten Eigenschaften erforderlich. Insbesondere müssen der Verlust im Mikrowellenbereich verringert und die Materialgüte ($\eta$) verbessert werden.

Außerdem besteht der Bedarf das Tieftemperaturverhalten der Bauteile zu verbessern. Hier sind sowohl eine Verbesserung der Betriebseigenschaften, wie auch der Lagerfähigkeit nötig.

Es besteht daher ein erheblicher Bedarf an flüssigkristallinen Medien mit geeigneten Eigenschaften für entsprechende praktische Anwendungen.

Überraschenderweise wird nun gefunden, dass mit den erfindungsgemäßen Verbindungen flüssigkristalline Medien mit einem geeigneten, nematischen Phasenbereich und hohem $\Delta n$ verwirklicht werden können, welche die Nachteile der Materialien des Standes der Technik nicht oder zumindest nur in erheblich geringerem Maße aufweisen.

Die Erfindung betrifft Verbindungen der Formel I,

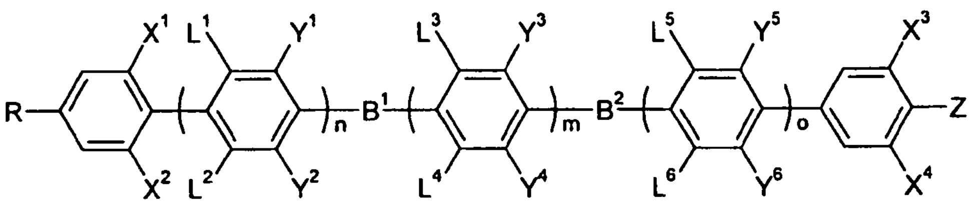

I

worin

B¹ $-CF_2O-$, $-CH_2O-$, $-CH_2-CH_2-$, $-CF_2CF_2-$, $-CH_2CF_2-$, $-CH=CH-$, $-CF=CF-$, $-CF=CH-$, $-C\equiv C-$, $-(CO)O-$, bevorzugt $-CF_2O-$,

B² $-CF_2O-$,

Z F, Cl, SCN, NCS, CN, OCN, NCO, Trifluormethyl oder Trifluormethoxy,

$X^{1-4}$ unabhängig voneinander F, Cl oder H, bevorzugt F oder H,

$Y^{1-6}$ unabhängig voneinander H, F, Cl oder T,

$L^{1-6}$ unabhängig voneinander H oder T,

T Alkyl, Alkoxy, Alkenyl, Alkenyloxy oder Alkinyl mit bis zu 6 Kohlenstoffatomen, bevorzugt mit 1 bis 3 Kohlenstoffatomen, bevorzugt Alkyl,

R einen unsubstituierten Alkylrest mit 1 bis 15 C-Atomen, wobei in diesem Rest auch eine oder mehrere $CH_2$-Gruppen jeweils unabhängig voneinander durch -C≡C-, -CH=CH-, -CF=CF-, -CF=CH-, -CH=CF-, -(CO)O-, -O(CO)-, -(CO)- oder -O- so ersetzt sein können, dass O- Atome nicht direkt miteinander verknüpft sind, F, Cl, Br, CN, $CF_3$, $OCF_3$, SCN, NCS oder $SF_5$,

m 2, 3 oder 4, bevorzugt 2, und

n, o unabhängig voneinander 0, 1 oder 2, bevorzugt 0 oder 1,

wobei m + n + o = 3 oder 4, bevorzugt 4 ist,
bedeuten,
und wobei in einer bevorzugten Ausführungsform für den Fall, dass n = 1, m = 2 und o = 0 ist, insbesondere für n + m + o = 3, mindestens ein Y oder L einen Rest T bedeutet. Besonders bevorzugt bedeuten $L^3$ oder $L^4$ einen Rest T.

Die erfindungsgemäßen Verbindungen besitzen einen relativ hohen Klärpunkt, eine außergewöhnlich hohe dielektrische Anisotropie (Δε), eine hohe optische Anisotropie (Δn), sowie eine vorteilhafte, hohe Rotationsviskosität um die Längsachse des Moleküls, besonders für T ≠ H. Sie besitzen, allein oder in Mischung mit weiteren mesogenen Komponenten, über einen breiten Temperaturbereich eine nematische Phase. Diese Eigenschaften machen sie besonders geeignet für die Verwendung in Bauteilen für die Hochfrequenztechnik, insbesondere in flüssigkristallinen Phasenschiebern.

Der Rest R bedeutet bevorzugt einen Alkylrest mit 1 bis 15 C-Atomen, wobei in diesem Rest auch eine oder mehrere $CH_2$-Gruppen jeweils unabhängig voneinander durch -C≡C-, -CH=CH-, -(CO)O-, -O(CO)-, -(CO)-oder -O- so ersetzt sein können, dass O-Atome nicht direkt miteinander verknüpft sind.

Beispielhafte Ausführungsformen der Erfindung sind daher die folgenden Strukturen:

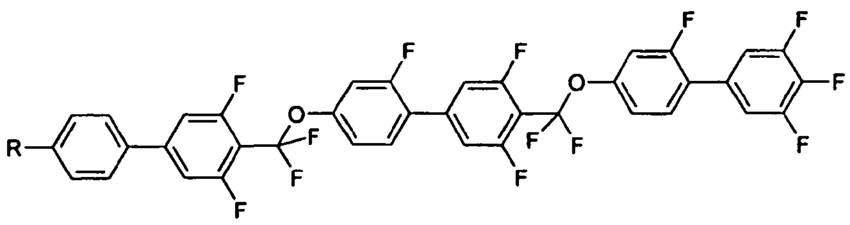

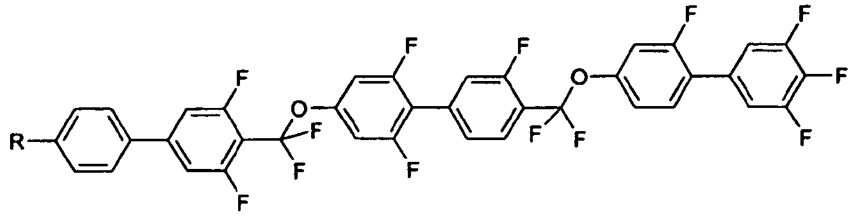

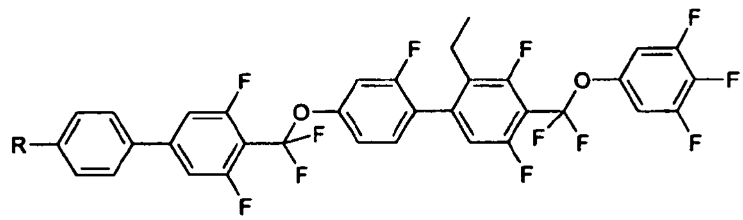

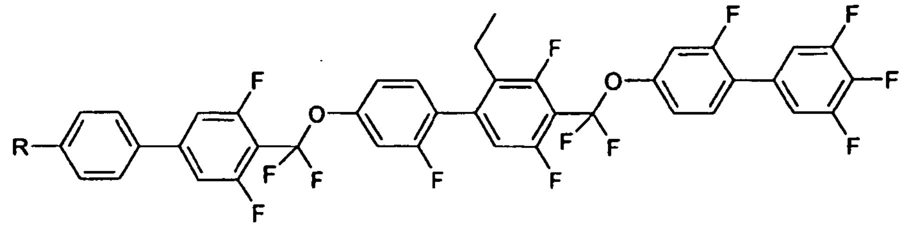

worin die variablen Gruppen wie oben definiert sind.

Die Verbindungen der Formel I können vorteilhaft wie an der folgenden beispielhaften Synthese ersichtlich hergestellt werden (Schema 1):

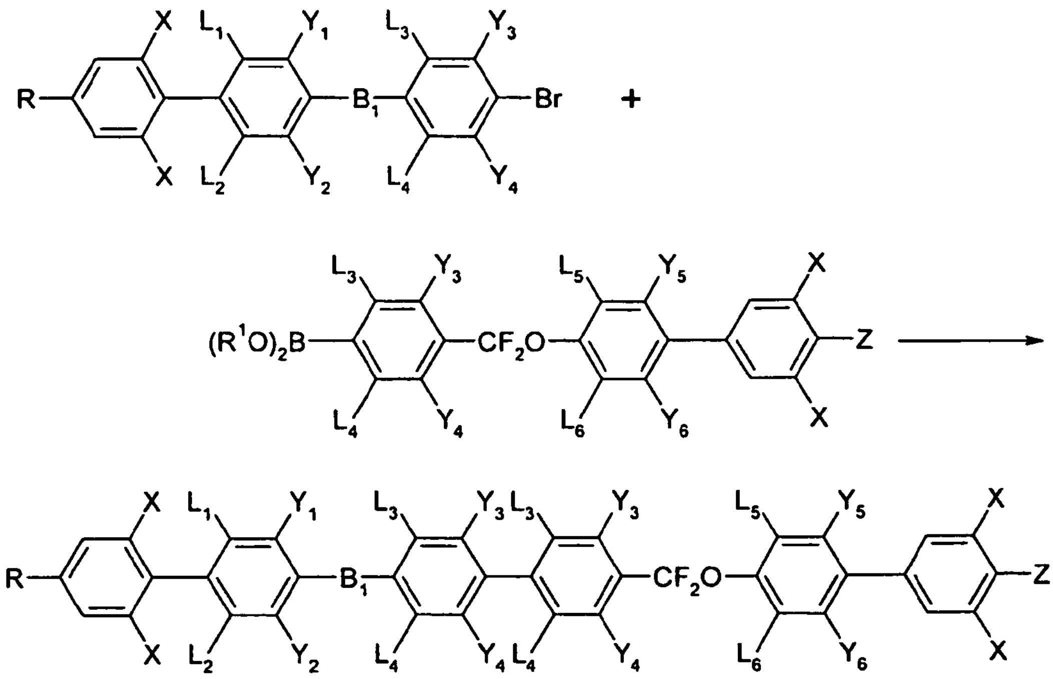

**Schema 1. Beispielhafte Synthese der Verbindungen der Formel I. $R^1/R^1$ = $C_{1-6}$ Alkyl oder zusammen optional alkyliertes Alkylen.**

Die Verknüpfungen zwischen den Benzolringen werden in der Regel durch Suzuki-Kopplung aus entsprechend substituierten Arylhalogeniden und Boronsäurederivaten hergestellt. Sind die Benzolringe durch eine Gruppe -$CF_2$O- verknüpft, so wird diese Einheit in der Regel durch eine oxidative Fluorierung von Dithioorthoestern, entstanden aus der Reaktion eines Bis(alkylthio)carbeniumsalzes mit einem Phenolderivat, hergestellt (vgl. z.B. EP 1259503 B1).

Die flüssigkristallinen Medien gemäß der vorliegenden Erfindung enthalten eine oder mehrere Verbindungen der Formel I und optional mindestens eine weitere, vorzugsweise mesogene Verbindung. Das Flüssigkristallmedium enthält daher bevorzugt zwei oder mehr Verbindungen. Bevorzugte Medien umfassen die bevorzugten Verbindungen der Formel 1.

Weitere Komponenten der flüssigkristallinen Medien sind vorzugsweise ausgewählt aus den Verbindungen der Formel II:

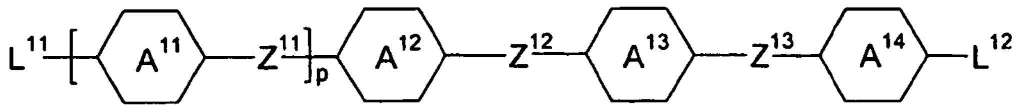 II

worin bedeuten:

$L^{11}$ $R^{11}$ oder $X^{11}$,

$L^{12}$ $R^{12}$ oder $X^{12}$

$R^{11}$ und $R^{12}$ unabhängig voneinander unfluoriertes Alkyl oder unfluoriertes Alkoxy mit 1 bis 17, bevorzugt mit 3 bis 10, C-Atomen oder unfluoriertes Alkenyl, unfluoriertes Alkenyloxy, oder unfluoriertes Alkoxyalkyl mit 2 bis 15, bevorzugt 3 bis 10, C-Atomen, vorzugsweise Alkyl oder unfluoriertes Alkenyl,

$X^{11}$ und $X^{12}$ unabhängig voneinander F, Cl, Br, -CN, -NCS, -SCN, $-SF_5$, fluoriertes Alkyl oder fluoriertes Alkoxy mit 1 bis 7 C-Atomen oder fluoriertes Alkenyl, fluoriertes Alkenyloxy oder fluoriertes Alkoxyalkyl mit 2 bis 7 C-Atomen, vorzugsweise fluoriertes Alkoxy, fluoriertes Alkenyloxy, F oder Cl,

p 0 oder 1,

$Z^{11}$ bis $Z^{13}$ unabhängig voneinander *trans-* -CH=CH-, *trans-* -CF=CF-, -C=C- oder eine Einfachbindung, und

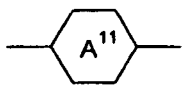 bis 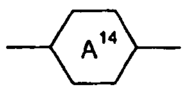

a) 1,4-Phenylen, worin ein oder mehrere, bevorzugt ein bis zwei CH-Gruppen durch N ersetzt sein können,
b) trans-1,4-Cyclohexylen oder Cyclohexenylen, worin auch eine oder zwei nicht benachbarte $CH_2$-Gruppen durch -O- und/oder -S- ersetzt sein können, und worin H durch F ersetzt sein kann,
c) 1,4-Naphthylen, und worin in den Gruppen a) und b) auch ein oder mehrere H-Atome gegen Br, Cl, F, CN, -NCS, -SCN, $SF_5$, $C_1$-$C_{10}$Alkyl, $C_3$-$C_6$ Cycloalkyl, $C_1$-$C_{10}$ Alkoxy oder eine ein- oder mehrfach fluorierte $C_1$-$C_{10}$ Alkyl- oder Alkoxygruppe ersetzt sein können,

bevorzugt unabhängig voneinander

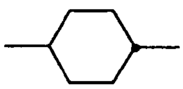, 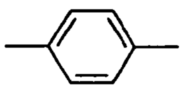, 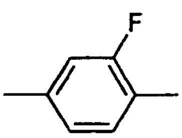,

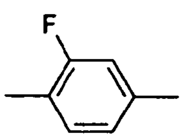, 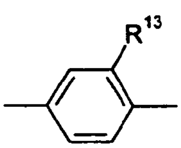, 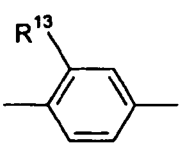,

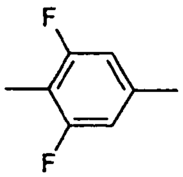,
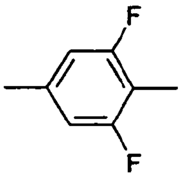 oder
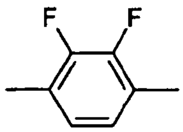,

wobei $R^{13}$ Cl, $C_{1-7}$-Alkyl oder $C_{3-6}$ Cycloalkyl bedeutet,

bedeuten.

In einer bevorzugten Ausführungsform der vorliegenden Erfindung enthalten die flüssigkristallinen Medien eine oder mehrere Verbindungen der Formel I und eine oder mehrere Verbindungen der Formel 11.

Bevorzugt enthalten die flüssigkristallinen Medien gemäß der vorliegenden Anmeldung insgesamt 5 bis 95 %, bevorzugt 10 bis 90 % und besonders bevorzugt 15 bis 80 %, an Verbindungen der Formel 1.

Bevorzugt enthalten die flüssigkristallinen Medien gemäß der vorliegenden Erfindung 10 % oder weniger, bevorzugt 5 % oder weniger, besonders bevorzugt 2 % oder weniger, ganz besonders bevorzugt 1 % oder weniger, und insbesondere überhaupt keine Verbindung mit nur zwei oder weniger fünf- und/oder sechsgliedrigen Ringen.

Bevorzugt enthalten die flüssigkristallinen Medien gemäß der vorliegenden Anmeldung insgesamt 10 bis 100 %, bevorzugt 20 bis 95 % und besonders bevorzugt 25 bis 90 %, an Verbindungen der Formel I und 11.

Gemäß der vorliegenden Erfindung werden die Verbindungen der Formel II vorzugsweise in einer Gesamtkonzentration von 10 % bis 90 %, stärker bevorzugt von 15 % bis 85 %, noch stärker bevorzugt von 25 % bis 80 % und ganz bevorzugt von 30 % bis 75 % der Gesamtmischung verwendet.

Die flüssigkristallinen Medien können darüber hinaus weitere Zusätze wie Stabilisatoren, chirale Dotierstoffe und Nanopartikel enthalten. Die einzelnen, zugesetzten Verbindungen werden in Konzentrationen von 0,01 bis 6 %, vorzugsweise von 0,1 bis 3 %, eingesetzt. Dabei werden jedoch die Konzentrationsangaben der übrigen Bestandteile der Flüssigkristallmischungen, also der flüssigkristallinen oder mesogenen Verbindungen, ohne Berücksichtigung der Konzentration dieser Zusatzstoffe angegeben.

Vorzugsweise enthalten die flüssigkristallinen Medien 0 bis 10 Gew.%, insbesondere 0,01 bis 5 Gew.% und besonders bevorzugt 0,1 bis 3 Gew.% an Stabilisatoren. Vorzugsweise enthalten die Medien einen oder mehrere Stabilisatoren ausgewählt aus 2,6-Di-tert-butylphenolen, 2,2,6,6-Tetramethylpiperidinen oder 2-Benzotriazol-2-yl-phenolen. Diese Hilfsstoffe sind dem Fachmann bekannt und kommerziell erhältlich, z. B. als Lichtschutzmittel.

Eine Ausführungsform der Erfindung ist daher auch ein Verfahren zur Herstellung eines Flüssigkristallmediums, das dadurch gekennzeichnet ist, dass eine oder mehrere Verbindungen der Formel I mit einer oder mehreren Verbindungen ausgewählt aus den Verbindungen der Formel II, wie oben angegeben, und optional mit einer oder mehreren weiteren Verbindungen und optional mit einem oder mehreren Additiven gemischt wird.

In der vorliegenden Anmeldung beschreibt der Ausdruck dielektrisch positiv Verbindungen oder Komponenten mit $\Delta\varepsilon > 3{,}0$, dielektrisch neutral mit $-1{,}5 \leq \Delta\varepsilon \leq 3{,}0$ und dielektrisch negativ mit $\Delta\varepsilon < -1{,}5$. Die dielektrische Anisotropie der jeweiligen Verbindung wird aus den Ergebnissen einer Lösung von 10 % der jeweiligen einzelnen Verbindung in einer nematischen Host-Mischung bestimmt. Wenn die Löslichkeit der jeweiligen Verbindung in der Host-Mischung weniger als 10 % beträgt, wird die Konzentration auf 5 % reduziert. Die Kapazitäten der Testmischungen werden sowohl in einer Zelle mit homeotroper als auch mit homogener Orientierung bestimmt. Die Schichtdicke beträgt bei beiden Zelltypen ca. 20 $\mu$m. Die angelegte Spannung ist eine Rechteckwelle mit einer Frequenz von 1 kHz und einem Effektivwert von typischerweise 0,5 V bis 1,0 V, wird jedoch stets so ausgewählt, dass sie unterhalb der kapazitiven Schwelle für die jeweilige Testmischung liegt.

$\Delta\varepsilon$ ist als $(\varepsilon\| - \varepsilon\perp)$ definiert, während $\varepsilon_{Drchschn.}$ $(\varepsilon\| + 2\ \varepsilon\perp) / 3$ ist.

Als Host-Mischung wird für dielektrisch positive Verbindungen die Mischung ZLI-4792 und für dielektrisch neutrale sowie für dielektrisch negative Verbindungen die Mischung ZLI-3086 verwendet, beide von Merck KGaA, Deutschland. Die absoluten Werte der dielektrischen Konstanten der Verbindungen werden aus der Änderung der jeweiligen Werte der Host-Mischung bei Zugabe der interessierenden Verbindungen bestimmt. Die Werte werden auf eine Konzentration der interessierenden Verbindungen von 100 % extrapoliert.

Komponenten, die bei der Messtemperatur von 20°C eine nematische Phase aufweisen, werden als solche gemessen, alle anderen werden wie Verbindungen behandelt.

Der Ausdruck Schwellenspannung bezeichnet in der vorliegenden Anmeldung die optische Schwelle und ist für 10 % relativen Kontrast ($V_{10}$) angegeben, der Ausdruck Sättigungsspannung bezeichnet die optische Sättigung und ist für 90 % relativen Kontrast ($V_{90}$) angegeben, in beiden Fällen, soweit nicht ausdrücklich etwas anderes angegeben ist. Die kapazitive Schwellenspannung ($V_0$), auch Freedericks-Schwelle $V_{Fr}$ genannt, wird nur verwendet, wenn dies ausdrücklich genannt ist.

Die in dieser Anmeldung angegebenen Parameterbereiche schließen sämtlich die Grenzwerte ein, wenn nicht ausdrücklich etwas anderes angegeben ist.

Die unterschiedlichen für verschiedene Bereiche von Eigenschaften angegebenen oberen und unteren Grenzwerte ergeben in Kombination miteinander zusätzliche bevorzugte Bereiche.

In der gesamten Anmeldung gelten, wenn nicht ausdrücklich anders angegeben, die folgenden Bedingungen und Definitionen. Alle Konzentrationen sind in Massenprozent angegeben und beziehen sich jeweils auf die Gesamtmischung, alle Temperaturen und alle Temperaturunterschiede sind in Grad Celsius bzw. Differenzgrad angegeben. Alle für Flüssigkristalle typischen physikalischen Eigenschaften werden nach "Merck Liquid Crystals, Physical Properties of Liquid Crystals", Stand Nov. 1997, Merck KGaA, Deutschland, bestimmt und sind für eine Temperatur von 20°C aufgeführt, wenn nicht ausdrücklich anders angegeben. Die optische Anisotropie (Δn) wird bei einer Wellenlänge von 589,3 nm bestimmt. Die dielektrische Anisotropie (Δε) wird bei einer Frequenz von 1 kHz bestimmt. Die Schwellenspannungen sowie alle anderen elektrooptischen Eigenschaften werden mit bei Merck KGaA, Deutschland, hergestellten Testzellen bestimmt. Die Testzellen für die Bestimmung von Δε besitzen eine Schichtdicke von circa 20 μm. Bei der Elektrode handelt es sich um eine kreisförmige ITO-Elektrode mit einer Fläche von 1,13 $cm^2$ und einem Schutzring. Die Ausrichtungsschichten sind SE-1211 von Nissan Chemicals, Japan, für homeotrope Ausrichtung ($\varepsilon_{||}$) und Polyimid AL-1 054 von Japan Synthetic Rubber, Japan, für homogene Ausrichtung ($\varepsilon_{\perp}$). Die Bestimmung der Kapazitäten erfolgt mit einem Frequenzgang-Analysegerät Solatron 1260 unter Verwendung einer Sinuswelle mit einer Spannung von 0,3 $V_{rms}$. Als Licht wird bei den elektrooptischen Messungen weißes Licht verwendet. Dabei wird ein Aufbau mit einem im Handel erhältlichen Gerät DMS der Fa. Autronic-Melchers, Germany verwendet. Die charakteristischen Spannungen werden unter senkrechter Beobachtung bestimmt. Die Schwellenspannung ($V_{10}$), "Mittgrau-Spannung" ($V_{50}$) und Sättigungsspannung ($V_{90}$) werden für 10 %, 50 % bzw. 90 % relativen Kontrast bestimmt.

Die flüssigkristallinen Medien werden bezüglich ihrer Eigenschaften im Frequenzbereich der Mikrowellen untersucht wie in A. Penirschke, S. Müller, P. Scheele, C. Weil, M. Wittek, C. Hock und R. Jakoby: "Cavity Perturbation Method for Characterization of Liquid Crystals up to 35 GHz", 34th European Microwave Conference - Amsterdam, S. 545-548 beschreiben. Vergleiche hierzu auch A. Gaebler, F. Gölden, S. Müller, A. Penirschke und R. Jakoby "Direct Simulation of Material Permittivites ...", 12MTC 2009 - International Instrumentation and Measurement Technology Conference, Singapur, 2009 (IEEE), S. 463-467 und DE 10 2004 029 429 A, in der ebenfalls detailliert ein Messverfahren beschrieben wird.

Der Flüssigkristall wird in eine Kapillare aus Polytetrafuorethylen (PTFE) gefüllt. Die Kapillare hat einen inneren Radius von 180 μm und einen äußeren Radius von 350 μm. Die effektive Länge beträgt 2,0 cm. Die gefüllte Kapillare wird in die Mitte der Kavität mit einer Resonanzfrequenz von 30 GHz eingebracht. Diese Kavität hat eine Länge von 6,6 mm, eine Breite von 7,1 mm und eine Höhe von 3,6 mm. Daraufhin wird das Eingangssignal ("source") angelegt und das Ergebnis des Ausgangssignals mit einem kommerziellen Netzwerkanalysator ("vector network analyzer") aufgenommen.

Aus der Änderung der Resonanzfrequenz und des Q-Faktors, zwischen der Messung mit der mit dem Flüssigkristall gefüllten Kapillare und der Messung ohne der mit dem Flüssigkristall gefüllten Kapillare, wird die dielektrische Konstante und der Verlustwinkel bei der entsprechenden Zielfrequenz mittels der Gleichungen 10 und 11 der A. Penirschke, S. Müller, P. Scheele, C. Weil, M. Wittek, C. Hock und R. Jakoby: "Cavity Perturbation Method for Characterization of Liquid Crystals up to 35 GHz", 34th European Microwave Conference - Amsterdam, S. 545-548 bestimmt, wie dort beschrieben.

Die Werte für die Komponenten der Eigenschaften senkrecht bzw. and parallel zum Direktor des Flüssigkristalls werden durch Orientierung des Flüssigkristalls in einem Magnetfeld erhalten. Dazu wird das Magnetfeld eines Permanentmagneten verwendet. Die Stärke des Magnetfelds beträgt 0,35 Tesla. Die Orientierung des Magneten wird entsprechend eingestellt und dann entsprechend um 90° gedreht.

Die dielektrische Anisotropie im μ-Wellenbereich ist definiert als

$$\Delta\varepsilon_r \equiv (\varepsilon_{r,||} - \varepsilon_{r,\perp}) .$$

Die Modulierbarkeit bzw. Steuerbarkeit ("tunability",τ) ist definiert als

$$\tau \equiv (\Delta\varepsilon_r / \varepsilon_{r,||}) .$$

Die Materialgüte (η) ist definiert als

$$\eta \equiv (\tau / \tan \delta_{\varepsilon\, r.Max.}) \ ,$$

mit dem maximalen dielektrischen Verlustfaktor tan $\delta_{\varepsilon\ r.Max}$:

$$\tan \delta_{\varepsilon\, r.Max.} \equiv \mathrm{Max.} \{ \tan \delta_{\varepsilon\, r.\perp} ; \tan \delta_{\varepsilon\, r.\parallel} \}$$

der aus dem Maximalwert der gemessenen Werte für tan $\delta_\varepsilon$, hervorgeht.

Die Materialgüte (η) der bevorzugten Flüssigkristallmaterialien beträgt 5 oder mehr, bevorzugt 6 oder mehr, bevorzugt 8 oder mehr, bevorzugt 10 oder mehr, bevorzugt 15 oder mehr, bevorzugt 17 oder mehr, besonders bevorzugt 20 oder mehr und ganz besonders bevorzugt 25 oder mehr.

Die bevorzugten Flüssigkristallmaterialien haben in den entsprechenden Bauteilen Phasenschiebergüten von 15°/dB oder mehr, bevorzugt von 20°/dB oder mehr, bevorzugt von 30°/dB oder mehr, bevorzugt von 40°/dB oder mehr, bevorzugt von 50°/dB oder mehr, besonders bevorzugt von 80°/dB oder mehr und ganz besonders bevorzugt von 100°/dB oder mehr. In der vorliegenden Anmeldung, bedeutet, wenn nicht ausdrücklich anders angegeben, der Begriff Verbindungen sowohl eine Verbindung, als auch mehrere Verbindungen.

Die erfindungsgemäßen Flüssigkristallmedien weisen bevorzugt nematische Phasen von jeweils mindestens von -20°C bis 80°C, bevorzugt von -30°C bis 85°C und ganz besonders bevorzugt von -40°C bis 100°C auf. Insbesondere bevorzugt reicht die Phase bis 120°C oder mehr, bevorzugt bis 140°C oder mehr und ganz besonders bevorzugt bis 180°C oder mehr. Hierbei bedeutet der Begriff eine nematische Phase aufweisen einerseits, dass bei tiefen Temperaturen bei der entsprechenden Temperatur keine smektische Phase und keine Kristallisation beobachtet wird und andererseits, dass beim Aufheizen aus der nematischen Phase noch keine Klärung auftritt. Die Untersuchung bei tiefen Temperaturen wird in einem Fließviskosimeter bei der entsprechenden Temperatur durchgeführt sowie durch Lagerung in Testzellen, mit einer Schichtdicke von 5 μm, für mindestens 100 Stunden überprüft. Bei hohen Temperaturen wird der Klärpunkt nach üblichen Methoden in Kapillaren gemessen.

Die Flüssigkristallmedien gemäß der vorliegenden Erfindung weisen bevorzugt einen Klärpunkt von 90°C oder mehr, stärker bevorzugt von 100°C oder mehr, noch stärker bevorzugt von 120°C oder mehr, besonders bevorzugt von 150°C oder mehr und ganz besonders bevorzugt von 170°C oder mehr, auf.

Das Δε des Flüssigkristallmediums gemäß der Erfindung bei 1 kHz und 20°C beträgt vorzugsweise 1 oder mehr, stärker bevorzugt 2 oder mehr und ganz bevorzugt 3 oder mehr.

Das Δn der Flüssigkristallmedien gemäß der vorliegenden Erfindung liegt bei 589 nm ($Na^D$) und 20°C vorzugsweise im Bereich von 0,20 oder mehr bis 0,90 oder weniger, stärker bevorzugt im Bereich von 0,25 oder mehr bis 0,90 oder weniger, noch stärker bevorzugt im Bereich von 0,30 oder mehr bis 0,85 oder weniger und ganz besonders bevorzugt im Bereich von 0,35 oder mehr bis 0,80 oder weniger.

In einer bevorzugten Ausführungsform der vorliegenden Anmeldung beträgt das Δn der Flüssigkristallmedien gemäß der vorliegenden Erfindung vorzugsweise 0,50 oder mehr, stärker bevorzugt 0,55 oder mehr.

Ferner sind die erfindungsgemäßen Flüssigkristallmedien durch hohe Anisotropien im Mikrowellenbereich gekennzeichnet. Die Doppelbrechung beträgt z.B. bei ca. 8,3 GHz bevorzugt 0,14 oder mehr, besonders bevorzugt 0,15 oder mehr, besonders bevorzugt 0,20 oder mehr, besonders bevorzugt 0,25 oder mehr und ganz besonders bevorzugt 0,30 oder mehr. Außerdem beträgt die Doppelbrechung bevorzugt 0,80 oder weniger.

In einigen Ausführungsformen können jedoch auch Flüssigkristalle mit einem negativen Wert der dielektrischen Anisotropie vorteilhaft verwendet werden.

Die eingesetzten Flüssigkristalle sind entweder Einzelsubstanzen oder Mischungen. Bevorzugt weisen sie eine nematische Phase auf.

Bevorzugte Bauelemente, die ein Flüssigkristallmedium oder wenigstens eine Verbindung gemäß der Erfindung enthalten, sind Phasenschieber, Varaktoren, Antennenarrays (z. B. für Funk, Mobilfunk, Radio, Mikrowellen/Radar und sonstige Datenübertragung), 'matching circuit adaptive filters' und andere. Bevorzugt sind Bauteile für die Hochfrequenztechnik, wie oben definiert. Bevorzugt sind außerdem durch unterschiedliche angelegte elektrische Spannungen modulierbare Bauteile. Ganz besonders bevorzugte Bauelemente sind Phasenschieber. In bevorzugten Ausführungsformen werden mehrere Phasenschieber funktionell verbunden, wodurch beispielsweise ein phasengesteuerte Gruppenantenne resultiert. Eine Gruppenantenne nutzt die Phasenverschiebung der in einer Matrix angeordneten Sende- oder Empfangselemente, um durch Interferenz eine Bündelung zu erzielen. Aus einer reihen- oder gitterförmigen parallelen Anordnung von Phasenschiebern lässt sich ein sog. 'phased array' aufbauen, das als abstimmbare Sende- oder Empfangsantenne für Hochfrequenzen (z. B. Gigahertzbereich) dienen kann. Erfindungsgemäße 'phased array'-Antennen besitzen einen sehr breiten nutzbaren Empfangskegel.

Bevorzugte Anwendungen sind Radarinstallationen und Datenübertragungsgeräte auf bemannten oder unbemannten Fahrzeugen aus dem Bereich Automobil, Schifffahrt, Flugzeuge, Raumfahrt und Satellitentechnik.

Zur Herstellung geeigneter Bauelemente, insbesondere Phasenschieber, wird typischerweise ein erfindungsgemäßes flüssigkristallines Medium in rechteckige Kavitäten von weniger als 1 mm Querschnitt und mehreren Zentimetern Länge eingebracht. Die Kavitäten besitzen entlang zweier langer Seiten angebrachte, gegenüberliegende Elektroden. Solche Anordnungen sind dem Fachmann vertraut. Durch Anlegen einer variablen Spannung können im späteren Betrieb die dielektrischen Eigenschaften des flüssigkristallinen Mediums abgestimmt werden, um verschiedene Frequenzen oder Richtungen einer Antenne einzustellen.

Der Ausdruck "Alkyl" umfasst vorzugsweise geradkettige und verzweigte Alkylgruppen mit 1 bis 15 Kohlenstoffatomen, insbesondere die geradkettigen Gruppen Methyl, Ethyl, Propyl, Butyl, Pentyl, Hexyl und Heptyl. Gruppen mit 2 bis 10 Kohlenstoffatomen sind im Allgemeinen bevorzugt.

Der Ausdruck "Alkenyl" umfasst vorzugsweise geradkettige und verzweigte Alkenylgruppen mit 2 bis 15 Kohlenstoffatomen, insbesondere die geradkettigen Gruppen. Besonders bevorzugte Alkenylgruppen sind $C_2$ bis $C_7$-1E-Alkenyl, $C_4$ bis $C_7$-3E-Alkenyl, $C_5$ bis $C_7$-4-Alkenyl, $C_6$ bis $C_7$-5-Alkenyl und $C_7$-6-Alkenyl, insbesondere $C_2$ bis $C_7$-1E-Alkenyl, $C_4$ bis $C_7$-3E-Alkenyl und $C_5$ bis $C_7$-4-Alkenyl. Beispiele weiterer bevorzugter Alkenylgruppen sind Vinyl, 1 E-Propenyl, 1 E-Butenyl, 1 E-Pentenyl, 1 E-Hexenyl, 1E-Heptenyl, 3-Butenyl, 3E-Pentenyl, 3E-Hexenyl, 3E-Heptenyl, 4-Pentenyl, 4Z-Hexenyl, 4E-Hexenyl, 4Z-Heptenyl, 5-Hexenyl, 6-Heptenyl und dergleichen. Gruppen mit bis zu 5 Kohlenstoffatomen sind im allgemeinen bevorzugt.

Der Ausdruck "Alkoxy" umfasst vorzugsweise geradkettige Reste der Formel $C_nH_{2n+1}$-O-, worin n 1 bis 10 bedeuten. Vorzugsweise ist n 1 bis 6. Bevorzugte Alkoxygruppen sind beispielsweise Methoxy, Ethoxy, n-Propoxy, n-Butoxy, n-Pentoxy, n-Hexoxy, n-Heptoxy, n-Octoxy, n-Nonoxy, n-Decoxy.

Der Ausdruck "Oxaalkyl" bzw. "Alkoxyalkyl" umfasst vorzugsweise geradkettige Reste der Formel $C_nH_{2n+1}$-O-$(CH_2)_m$, worin n und m jeweils unabhängig voneinander 1 bis 10 bedeuten. Vorzugsweise ist n 1 und m 1 bis 6.

Der Ausdruck "fluorierter Alkylrest" umfasst vorzugsweise ein- oder mehrfach fluorierte Reste. Perfluorierte Reste sind eingeschlossen. Besonders bevorzugt sind $CF_3$, $CH_2CF_3$, $CH_2CHF_2$, $CHF_2$, $CH_2F$, $CHFCF_3$ und $CF_2CHFCF_3$.

Der Ausdruck "fluorierter Alkoxyrest" umfasst vorzugsweise ein- oder mehrfach fluorierte Reste. Perfluorierte Reste sind eingeschlossen. Besonders bevorzugt ist $OCF_3$,

In der vorliegenden Anmeldung bedeutet Hochfrequenztechnik Anwendungen mit Frequenzen im Bereich von 1 MHz bis 1 THz, bevorzugt von 1 GHz bis 500 GHz, stärker bevorzugt 2 GHz bis 300 GHz, insbesondere bevorzugt von 5 bis 150 GHz.

Die Flüssigkristallmedien gemäß der vorliegenden Erfindung können weitere Zusatzstoffe und chirale Dotierstoffe in den üblichen Konzentrationen beinhalten. Die Gesamtkonzentration dieser weiteren Bestandteile liegt im Bereich von 0 % bis 10 %, vorzugsweise 0,1 % bis 6 %, bezogen auf die Gesamtmischung. Die Konzentrationen der einzelnen verwendeten Verbindungen liegen vorzugsweise jeweils im Bereich von 0,1 % bis 3 %. Die Konzentration dieser und ähnlicher Zusatzstoffe wird bei der Angabe der Werte und Konzentrationsbereiche der Flüssigkristallkomponenten und Flüssigkristallverbindungen der Flüssigkristallmedien in dieser Anmeldung nicht berücksichtigt.

Die erfindungsgemäßen Flüssigkristallmedien bestehen aus mehreren Verbindungen, vorzugsweise aus 3 bis 30, stärker bevorzugt aus 4 bis 20 und ganz bevorzugt aus 4 bis 16 Verbindungen. Diese Verbindungen werden auf herkömmliche Weise gemischt. In der Regel wird die gewünschte Menge der in der geringeren Menge verwendeten Verbindung in der in der größeren Menge verwendeten Verbindung gelöst. Liegt die Temperatur über dem Klärpunkt der in der höheren Konzentration verwendeten Verbindung, ist die Vervollständigung des Lösungsvorgangs besonders leicht zu beobachten. Es ist jedoch auch möglich, die Medien auf anderen üblichen Wegen, beispielsweise unter Verwendung von so genannten Vormischungen, bei denen es sich z.B. um homologe oder eutektische Mischungen von Verbindungen handeln kann, oder unter Verwendung von so genannten "Multi-Bottle"-Systemen, deren Bestandteile selbst gebrauchsfertige Mischungen sind, herzustellen.
Alle Temperaturen, wie z.B. der Schmelzpunkt T(K,N) bzw. T(K,S), der Übergang von der smektischen (S) zur nematischen (N) Phase T(S,N) und der Klärpunkt T (N,I) der Flüssigkristalle sind in Grad Celsius angegeben. Alle Temperaturdifferenzen sind in Differenzgraden angegeben.

In der vorliegenden Anmeldung bedeutet Hochfrequenztechnik Anwendungen mit Frequenzen im Bereich von 1 MHz bis 1 THz, bevorzugt von 1 GHz bis 500 GHz, bevorzugt 2 GHz bis 300 GHz, insbesondere bevorzugt von ca. 5 bis 150 GHz. Die Anwendung liegt bevorzugt im Mikrowellenspektrum oder angrenzenden, für die Nachrichtenübertragung geeigneten Bereichen, in denen 'phased array'-Module in Sende- und Empfangsantennen zum Einsatz kommen können.

In der vorliegenden Anmeldung und in den folgenden Beispielen sind die Strukturen der Flüssigkristallverbindungen durch Akronyme angegeben, wobei die Transformation in chemische Formeln gemäß folgender Tabellen A und B erfolgt. Alle Reste $C_nH_{2n+1}$ und $C_mH_{2m+1}$ sind geradkettige Alkylreste mit n bzw. m C-Atomen; n, m und k sind ganze Zahlen und bedeuten vorzugsweise 0, 1, 2, 3, 4, 5, 6, 7, 8, 9, 10, 11 oder 12. Die Codierung gemäß Tabelle B versteht sich von selbst. In Tabelle A ist nur das Akronym für den Grundkörper angegeben. Im Einzelfall folgt getrennt von

Akronym für den Grundkörper mit einem Strich ein Code für die Substituenten $R^{1*}$, $R^{2*}$, $L^{1*}$ und $L^{2*}$:

| Code für $R^{1*}$, $R^{2*}$, $L^{1*}$, $L^{2*}$, $L^{3*}$ | $R^{1*}$ | $R^{2*}$ | $L^{1*}$ | $L^{2*}$ |
|---|---|---|---|---|
| nm | $C_nH_{2n+1}$ | $C_mH_{2m+1}$ | H | H |
| nOm | $C_nH_{2n+1}$ | $OC_mH_{2m+1}$ | H | H |
| nO.m | $OC_nH_{2n+1}$ | $C_mH_{2m+1}$ | H | H |
| n | $C_nH_{2n+1}$ | CN | H | H |
| nN.F | $C_nH_{2n+1}$ | CN | F | H |
| nN.F.F | $C_nH_{2n+1}$ | CN | F | F |
| nF | $C_nH_{2n+1}$ | F | H | H |
| nCl | $C_nH_{2n+1}$ | Cl | H | H |
| nOF | $OC_nH_{2n+1}$ | F | H | H |
| nF.F | $C_nH_{2n+1}$ | F | F | H |
| nF.F.F | $C_nH_{2n+1}$ | F | F | F |
| $nOCF_3$ | $C_nH_{2n+1}$ | $OCF_3$ | H | H |
| $nOCF_3$.F | $C_nH_{2n+1}$ | $OCF_3$ | F | H |
| n-Vm | $C_nH_{2n+1}$ | $-CH=CH-C_mH_{2m+1}$ | H | H |
| nV-Vm | $C_nH_{2n+1}-CH=CH-$ | $-CH=CH-C_mH_{2m+1}$ | H | H |

Bevorzugte Mischungskomponenten finden sich in den Tabellen A und B.

## Tabelle A

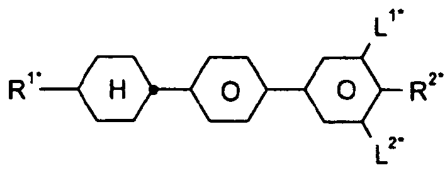

**BCH**

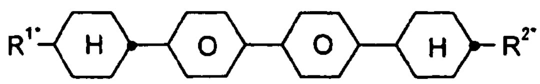

**CBC**

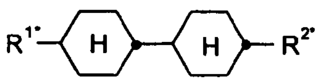

CCH

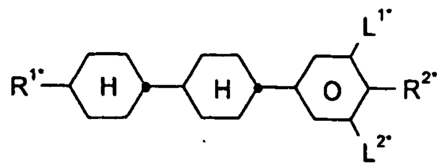

CCP

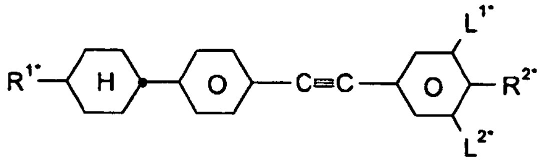

CPTP

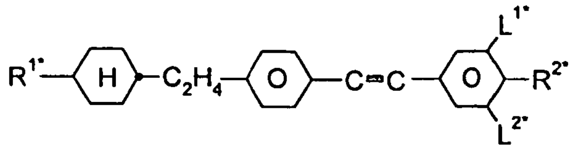

CEPTP

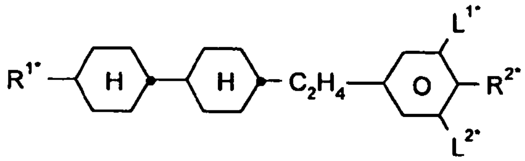

ECCP

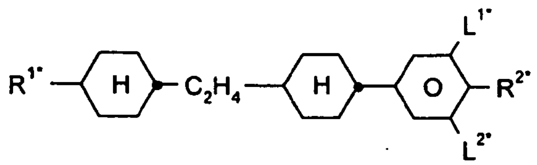

CECP

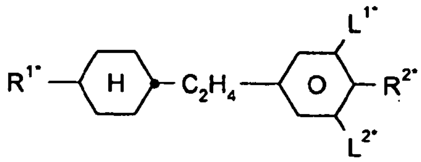

EPCH

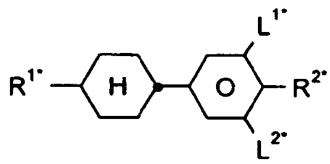

PCH

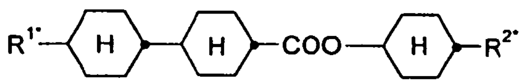

CH

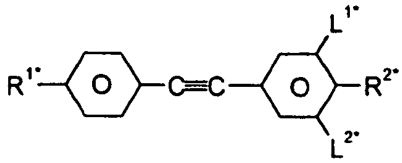

PTP

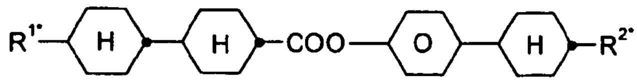

CCPC

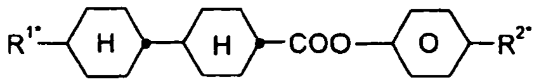

CP

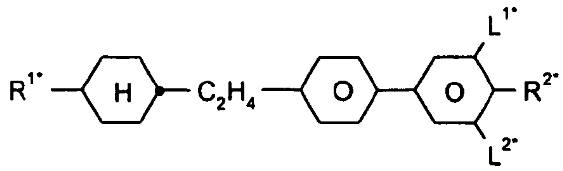

BECH

## Tabelle B

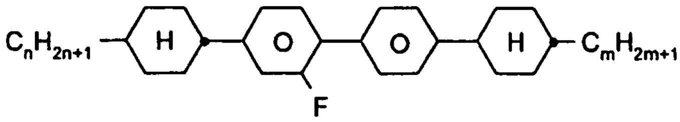

CBC-nmF

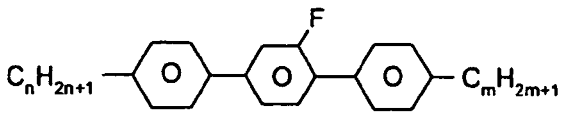

PGP-n-m

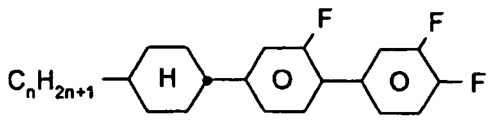

CGG-n-F

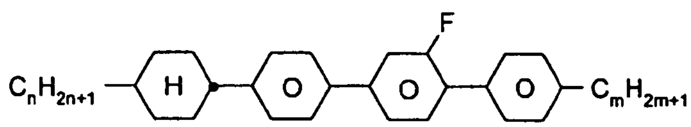

CPGP-n-m

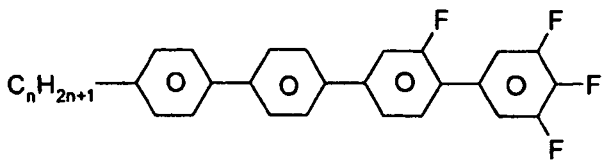

**PPGU-n-F**

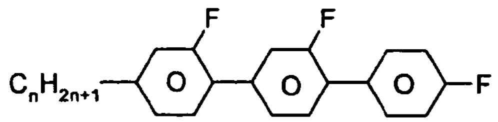

**GGP-n-F**

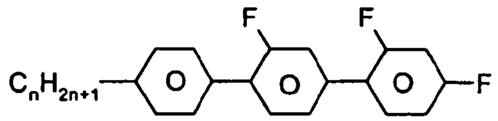

**PGIGI-n-F**

Die folgenden Beispiele erläutern die vorliegende Erfindung, ohne sie in irgendeiner Weise zu beschränken.

Aus den physikalischen Eigenschaften wird dem Fachmann jedoch deutlich, welche Eigenschaften zu erzielen sind und in welchen Bereichen sie modifizierbar sind. Insbesondere ist also die Kombination der verschiedenen Eigenschaften, die vorzugsweise erreicht werden können, für den Fachmann gut definiert.

**Beispiele**

Die eingesetzten Acetylene, soweit nicht kommerziell erhältlich, werden nach Standard-Laborvorschriften synthetisiert.

Synthesebeispiele:

**1.1)**

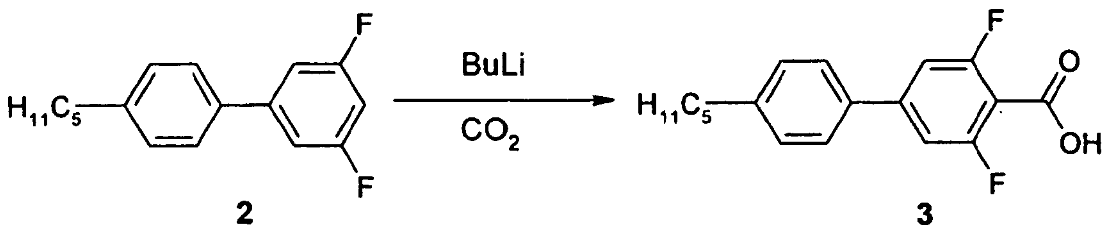


**2** **3**

120 g (430 mmol) des Biphenyls **2** werden in 500 ml THF gelöst und bei -70 °C mit 188 ml (470 mmol) einer 2,5 M Lösung von n-Butyllithium in n-Hexan versetzt. Nach 30 min bei dieser Temperatur wird $CO_2$ in die Apparatur eingeleitet und der Ansatz mit gekühltem THF verdünnt, wobei die Innentemperatur unter 60 °C gehalten wird. Nach Abklingen der Reaktion wird das Reaktionsgemisch bei -30 °C mit Wasser verrührt und mit Salzsäure angesäuert. Die organische Phase wird eingeengt und der Rückstand aus Isopropanol kristallisiert.

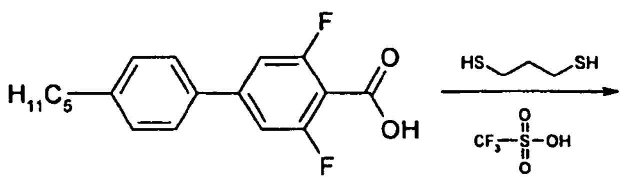

3

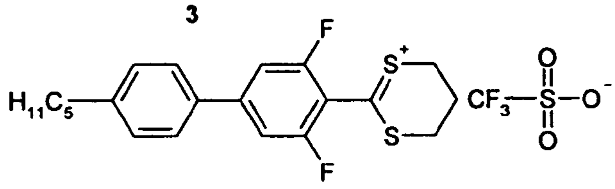

4

Unter Stickstoffatmosphäre werden 111 g (370 mmol) der Säure **3**, 47 ml (480 mmol) Propandithiol, 42 ml (480 mmol) Trifluormethansulfonsäure, 145 ml Toluol und 145 ml Isooctan zusammengegeben und am Wasserabscheider zum Sieden erhitzt. Nach Ende der Wasserbildung wird bei 80 °C der Ansatz mit 400 ml Dibutylether und bei Raumtemperatur mit 1000 ml Diethylether versetzt. Anschließend wird das Gemisch auf 0 °C abgekühlt. Der ausgefallene Feststoff wird abgesaugt und getrocknet.

**1.2)**

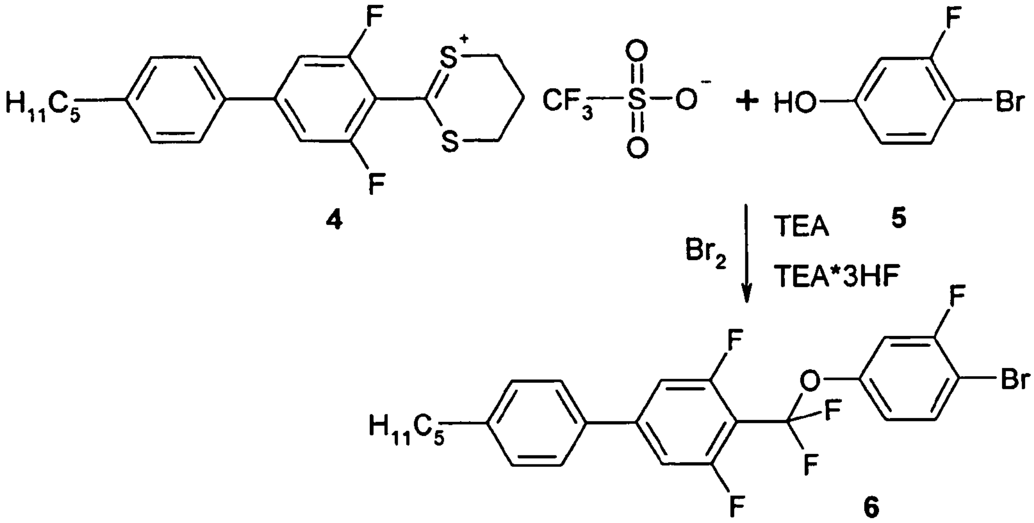


4 5 6

Bei 20 °C wird eine Suspension von 124 g (240 mmol) des Triflats **4** in 400 ml Dichlormethan mit eine Mischung aus 39 ml (280 mmol) Triethylamin und 54 g (280 mmol) des Phenols **5** gelöst in 200 ml Dichlormethan versetzt und 60 min nachgerührt. Anschließend wird bei -70 °C 77 g (480 mmol) Triethylamintrishydrofluorid in den Ansatz gegeben. Nach 60 min bei -70 °C werden 15 ml (600 mmol) Brom gelöst in 30 ml Dichlormethan zugesetzt. Nach 30 min wird der Ansatz innerhalb von 75 min auf -30 °C erwärmt und mit 41 ml (480 mmol) Morpholin versetzt. Nach 1 h bei 0 °C wird das Reaktionsgemisch auf 600 g Eis/Wassergemisch versetzt mit 150 ml 47 %iger Kalilauge gegeben. Die organische Phase wird mit Dichlormethan extrahiert, die vereinigten organischen Phasen getrocknet und eingeengt. Der Rückstand wird mit n-Heptan extrahiert und der Extrakt über Kieselgel filtriert.

**1.3)** Analog zu den obigen Vorschriften wird die Verbindung **9** hergestellt.

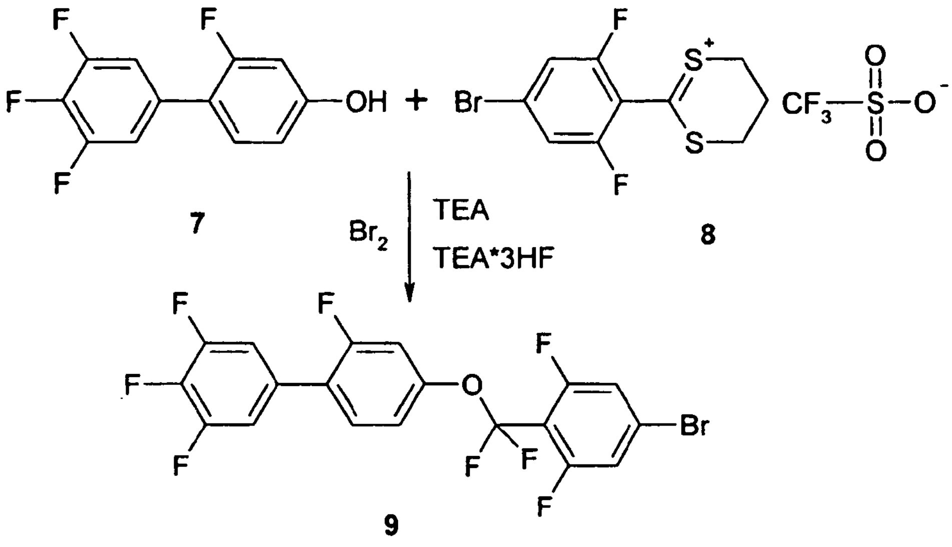


7

8

9

1.4)

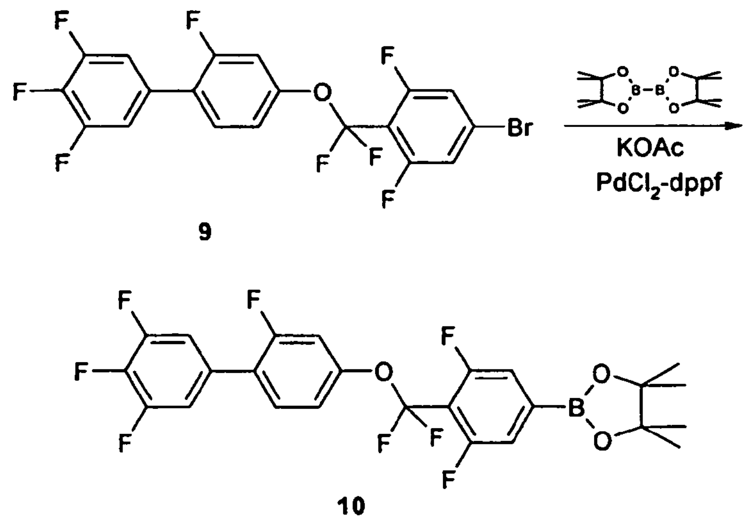


9

10

Unter Stickstoffatmosphäre werden 75 g (160 mmol) des Bromids **9** in 580 ml Dioxan gelöst und 49 g (190 mmol) Bis-(pinacolato)-dibor hinzugefügt. Anschließend wird das Gemisch mit 43 g (440 mmol) Kaliumacetat und 3,4 g $PdCl_2$-dppf versetzt und 6 h auf 100°C erwärmt. Bei Raumtemperatur wird der Ansatz mit 1000 ml MTB-Ether und 300 ml Wasser versetzt. Die wässerige Phase wird mit MTB-Ether extrahiert, die vereinigten organischen Phasen mit Wasser und Kochsalzlösung gewaschen, getrocknet und eingeengt. Der Rückstand wird über Kieselgel gegeben und das erhaltene Produkt aus Ethanol kristallisiert.

1.5)

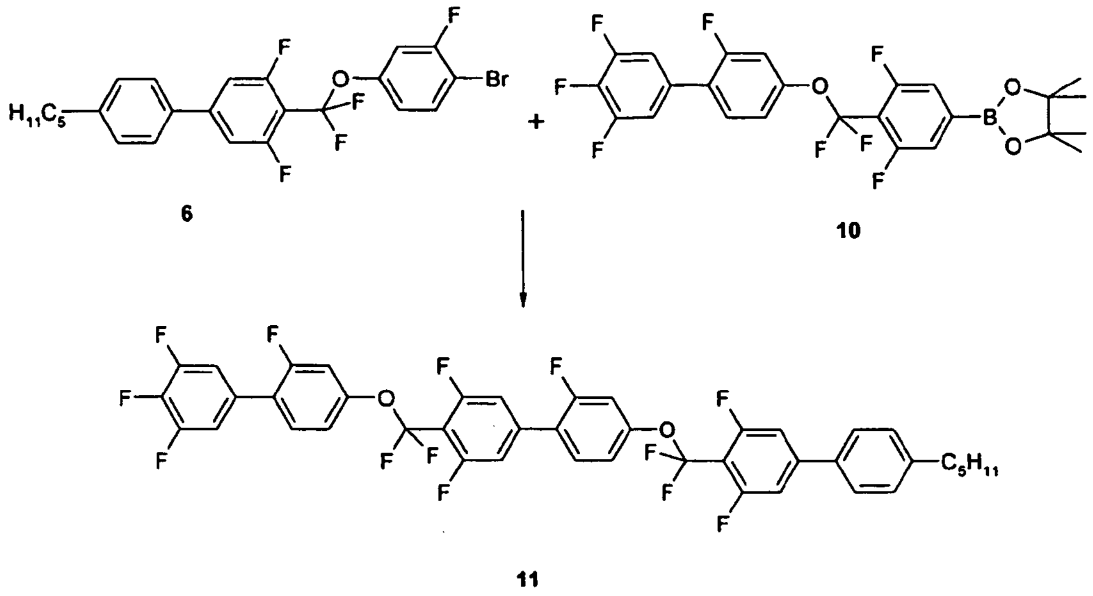

6 + 10 → 11

6 g (20 mmol) Natriummetaborat-octahydrat wird in 15 ml Wasser vorgelegt und mit 30 ml THF, 286 mg (0,4 mmol) Bis(triphenylphosphin)-palladium(II)-chlorid und 0,05 ml (0,4 mmol) Hydraziniumhydroxid versetzt und 5 min bei Raumtemperatur gerührt. Anschließend wird 10 g (20 mmol) des Bromids **6** und 10,6 g (20 mmol) des Boronesters **10** gelöst in 70 ml THF zugegeben. Der Ansatz wird 8 h unter Rückfluss erhitzt. Nach dem Abkühlen wird der Ansatz mit 200 ml MTB-Ether verdünnt. Die organische Phase wird eingeengt, der Rückstand aus n-Heptan/Toluol (9:1) und Aceton kristallisiert.

$\Delta\varepsilon = +42{,}5$

$\Delta n = 0{,}211$

$\gamma_l = 5890$ mPa·s

K 86 N 236 I

2.1)

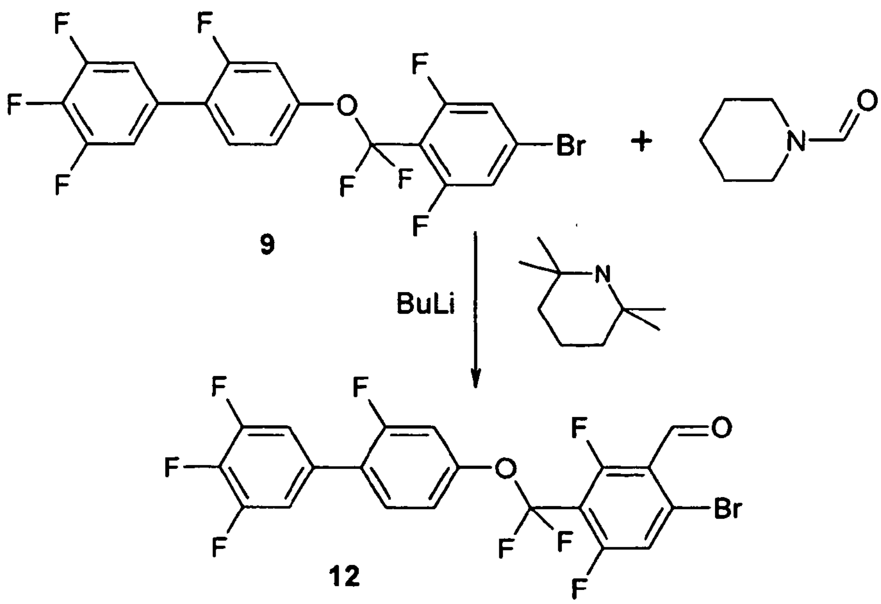


9 → 12

Unter Stickstoff wird eine Lösung von 8,6 ml (50 mmol) 2,2,6,6-Tetramethylpiperidin in THF bei -20 °C mit 35 ml (55 mmol) einer 15 %igen Lösung von Butyllithium in Hexan versetzt und 20 min gerührt. Diese Lösung wird bei -70 °C zu einer Lösung von 24 g (50 mmol) des Bromids **9** gegeben. Nach 1 h werden 5,6 ml (50 mmol) N-Formylpiperidin gelöst in 30 ml THF zugegeben. Anschließend wird die Kühlung entfernt. Bei -10 °C wird der Ansatz hydrolysiert und mit Salzsäure angesäuert. Die organische Phase wird mit Natriumhydrogencarbonatlösung gewaschen, getrocknet und eingeengt. Der Rückstand wird über Kieselgel gegeben (Chlorbutan).

**2.2)**

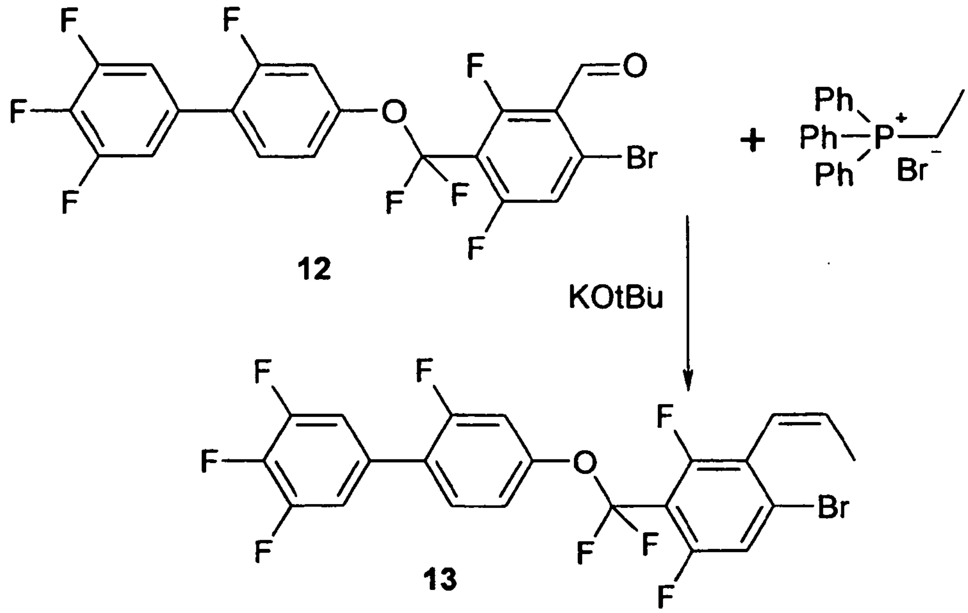


Unter Stickstoff werden 5,4 g (14 mmol) Ethyltriphenylphosphoniumbromid in 100 ml THF suspendiert und bei 0 °C 1,5 g (13 mmol) Kalium-*tert.*-butylat versetzt. Nach 30 min wird eine Lösung von 6,1 g (12 mmol) des Aldehyds **12** zugesetzt. Das Gemisch wird 60 h bei Raumtemperatur gerührt. Anschließend wird der Ansatz mit Wasser versetzt, mit Salzsäure angesäuert und Heptan verdünnt. Die organische Phase wird mit Natriumhydrogencarbonatlösung gewaschen, getrocknet und eingeengt. Der Rückstand wird über Kieselgel gegeben (Heptan).

**2.3)**

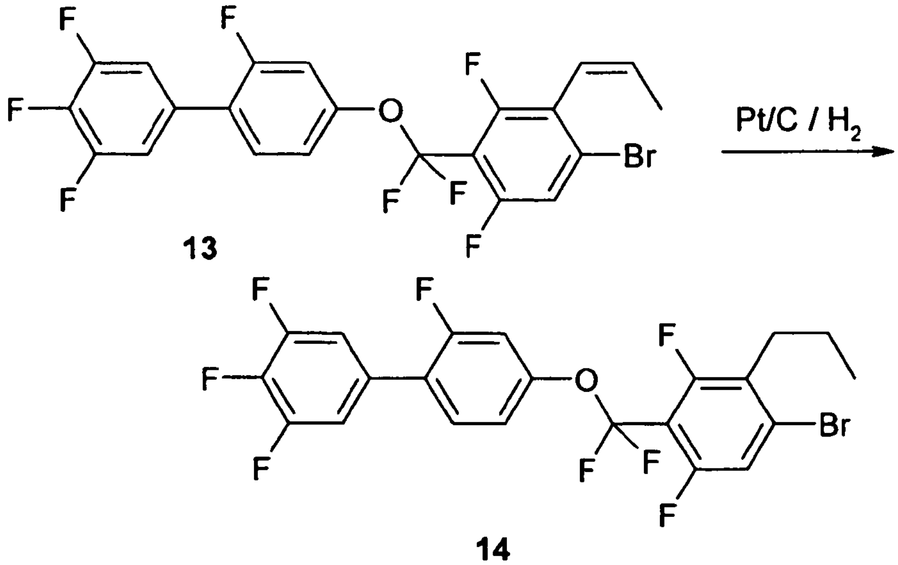


13

14

2,2 g (4,2 mmol) des Styrols **13** wird in 20 ml THF gelöst und am Platinkatalysator hydriert. Die Lösung wird eingeengt und über Kieselgel gegeben. (Heptan).

**2.4)** Die Synthese des Boronesters **15** erfolgt analog der obigen Vorschrift 1.4.

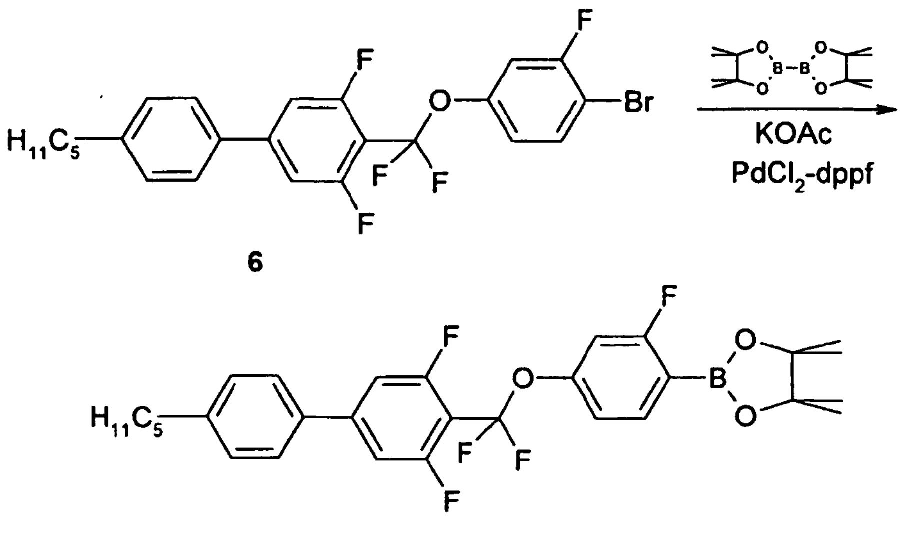


6

15

**2.5)** Die Synthese von **16** wird analog zur Herstellung von **11** (Beispiel 1.5) durchgeführt.

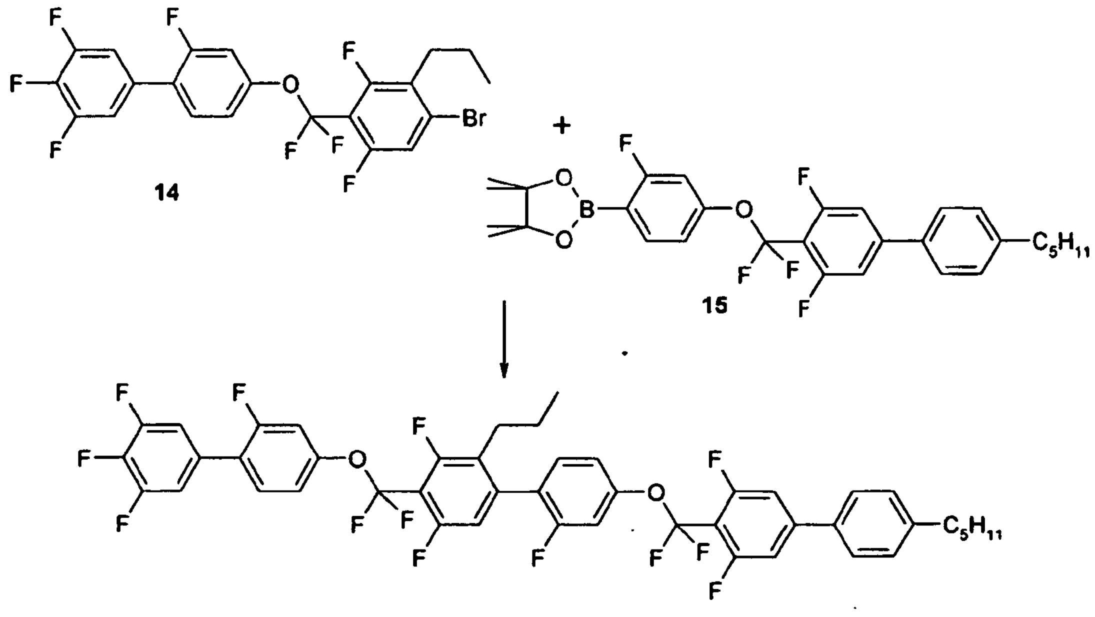

14

15

16

$\Delta\varepsilon$ = +35,5
$\Delta n$ = 0,159
$\gamma_l$ = 8584 mPa·s
K 80 SmA (39) N 101 I

Mischungsbeispiel 1

Es wird eine Flüssigkristallmischung mit der Zusammensetzung und den Eigenschaften wie in der folgenden Tabelle angegeben hergestellt. Die Komponente (**16**) ist die Verbindung aus Synthesebeispiel 2.5).

| Zusammensetzung | | | Physikalische Eigenschaften | | |
|---|---|---|---|---|---|
| Verbindung | | | T(N,I) | = 101 | °C |
| Nr. | Abkürzung | | | | |
| 1 | BCH-3F.F | 10,8 % | | | |
| 2 | BCH-5F.F | 9,00 % | $\Delta n$ (20 °C, 589,3 nm) = | 0,108 | |
| 3 | ECCP-30CF3 | 4,50 % | | | |
| 4 | ECCP-50CF3 | 4,50 % | | | |
| 5 | CBC-33F | 1,80 % | $\Delta\varepsilon$ (20 °C, 1 kHz) | = 9 | |
| 6 | CBC-53F | 1,80 % | | | |
| 7 | CBC-55F | 1,80 % | | | |
| 8 | PCH-6F | 7,20 % | | | |
| 9 | PCH-7F | 5,40 % | | | |
| 10 | CCP-20CF3 | 7,20 % | | | |
| 11 | CCP-30CF3 | 10,8 % | | | |
| 12 | CCP-40CF3 | 6,30 % | | | |
| 13 | CCP-50CF3 | 9,90 % | | | |
| 14 | PCH-5F | 9,00 % | | | |
| 15 | (**16**) | 10.0% | | | |
| $\Sigma$ | | 100 % | | | |

Diese flüssigkristalline Mischung wird für Anwendungen im Mikrowellenbereich, insbesondere für einen Phasenschieber ('phased array') verwendet.

Weitere Kombinationen der Ausführungsformen und Varianten der Erfindung gemäß der Beschreibung ergeben sich auch aus den folgenden Ansprüchen.

## Patentansprüche

1. Verbindungen der Formel

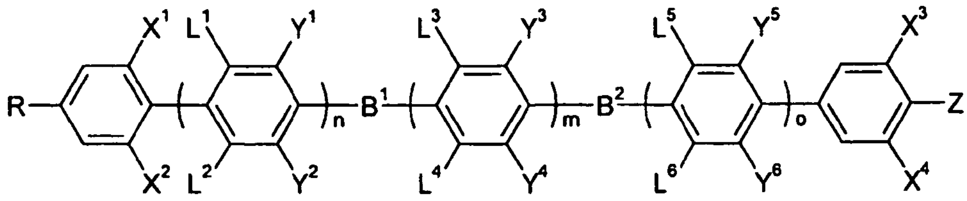

I

worin

$B^1$ $-CF_2O-$, $-CH_2O-$, $-CH_2-CH_2-$, $-CF_2CF_2-$, $-CH_2CF_2-$, -CH=CH-, -CF=CF-, -CF=CH-, -C≡C-, -(CO)O-,
$B^2$ $-CF_2O-$,
Z F, Cl, SCN, NCS, CN, OCN, NCO, Trifluormethyl oder Trifluormethoxy,
$X^{1-4}$ unabhängig voneinander F, Cl, oder H,
$Y^{1-6}$ unabhängig voneinander H, F, Cl oder T,
$L^{1-6}$ unabhängig voneinander H oder T,
T Alkyl, Alkoxy, Alkenyl, Alkenyloxy oder Alkinyl mit bis zu 6 Kohlenstoffatomen,
R einen unsubstituierten Alkylrest mit 1 bis 15 C-Atomen, wobei in diesem Rest auch eine oder mehrere $CH_2$-Gruppen jeweils unabhängig voneinander durch -C≡C-, -CH=CH-, -CF=CF-, -CF=CH-, -CH=CF-, -(CO)O-, -O(CO)-, -(CO)- oder -O- so ersetzt sein können, dass O- Atome nicht direkt miteinander verknüpft sind, F, Cl, Br, CN, $CF_3$, $OCF_3$, SCN, NCS oder $SF_5$,
m 2, 3 oder 4, und
n, o unabhängig voneinander 0, 1 oder 2,

wobei m + n + o = 3 oder 4 ist,
bedeuten.

2. Verbindungen nach Anspruch 1, **dadurch gekennzeichnet, dass** $B^1$ eine Gruppe $-CF_2O-$ bedeutet.

3. Verbindungen nach Anspruch 1 oder 2, **dadurch gekennzeichnet, dass** m = 2 ist.

4. Verbindungen nach einem oder mehreren der Ansprüche 1 bis 3, **dadurch gekennzeichnet, dass** n und o beide 1 sind.

5. Verbindungen nach einem oder mehreren der Ansprüche 1 bis 4, **dadurch gekennzeichnet, dass** für den Fall, dass n = 1, m = 2 und o = 0 ist, mindestens ein Y oder L einen Rest T bedeutet.

6. Flüssigkristallmedium, **dadurch gekennzeichnet, dass** es eine oder mehrere Verbindungen der Formel I nach einem oder mehreren der Ansprüche 1 bis 5 enthält.

7. Flüssigkristallmedium nach Anspruch 6, **dadurch gekennzeichnet, dass** es zusätzlich eine oder mehrere Verbindungen ausgewählt aus den Verbindungen der Formel II enthält:

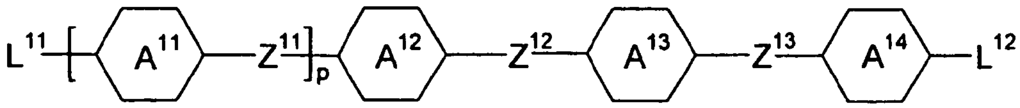 II

worin bedeuten:

$L^{11}$ $R^{11}$ oder $X^{11}$,
$L^{12}$ $R^{12}$ oder $X^{12}$,
$R^{11}$ und $R^{12}$ unabhängig voneinander unfluoriertes Alkyl oder unfluoriertes Alkoxy mit 1 bis 17, bevorzugt mit 3 bis 10, C-Atomen oder unfluoriertes Alkenyl, unfluoriertes Alkenyloxy, oder unfluoriertes Alkoxyalkyl mit 2 bis 15, bevorzugt 3 bis 10, C-Atomen,
$X^{11}$ und $X^{12}$ unabhängig voneinander F, Cl, Br, -CN, -NCS, -SCN, $-SF_5$, fluoriertes Alkyl oder fluoriertes Alkoxy mit 1 bis 7 C-Atomen oder fluoriertes Alkenyl, fluoriertes Alkenyloxy oder fluoriertes Alkoxyalkyl mit 2 bis 7 C-Atomen,
p 0 oder 1,
$Z^{11}$ bis $Z^{13}$ unabhängig voneinander *trans-* -CH=CH-, *trans-* -CF=CF-, -C≡C- oder eine Einfachbindung, und

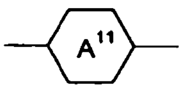 bis 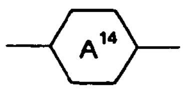

unabhängig voneinander

a) 1,4-Phenylen, worin ein oder mehrere, bevorzugt ein bis zwei CH-Gruppen durch N ersetzt sein können,
b) trans-1,4-Cyclohexylen oder Cyclohexenylen, worin auch eine oder zwei nicht benachbarte $CH_2$-Gruppen durch -O- und/oder -S- ersetzt sein können, und worin H durch F ersetzt sein kann,
c) 1,4-Naphthylen, und worin in den Gruppen a) und b) auch ein oder mehrere H-Atome gegen Br, Cl, F, CN, -NCS, -SCN, $SF_5$, $C_1$-$C_{10}$ Alkyl, $C_3$-$C_6$ Cycloalkyl, $C_1$-$C_{10}$ Alkoxy oder eine ein- oder mehrfach fluorierte $C_1$-$C_{10}$ Alkyl- oder Alkoxygruppe ersetzt sein können.

**8.** Flüssigkristallmedium nach Anspruch 6 oder 7, **dadurch gekennzeichnet, dass** die Konzentration der Verbindungen der Formel I im Medium im Bereich von insgesamt 5 % bis 95 % liegt.

**9.** Verwendung der Verbindungen der Formel I nach einem oder mehreren der Ansprüche 1 bis 5 in einer flüssigkristallinen Mischung.

**10.** Verwendung der Verbindungen der Formel I nach einem oder mehreren der Ansprüche 1 bis 5 in einem Bauteil für die Hochfrequenztechnik.

**11.** Verfahren zur Herstellung eines Flüssigkristallmediums nach einem oder mehreren der Ansprüche 6 bis 8, **dadurch gekennzeichnet, dass** eine oder mehrere Verbindungen der Formel I mit einer oder mehreren Verbindungen ausgewählt aus den Verbindungen der Formel II, wie in Anspruch 6 angegeben und optional mit einer oder mehreren weiteren Verbindungen und optional mit einem oder mehreren Additiven gemischt wird.

**12.** Bauteil für die Hochfrequenztechnik, **dadurch gekennzeichnet, dass** es ein Flüssigkristallmedium nach einem oder mehreren der Ansprüche 6 bis 8 enthält.

**13.** Bauteil nach Anspruch 12, **dadurch gekennzeichnet, dass** es sich um einen oder mehrere funktionell verbundene Phasenschieber handelt.

**14.** Verwendung eines Flüssigkristallmediums nach einem oder mehreren der Ansprüche 6 bis 8 in einem Bauteil für die Hochfrequenztechnik.

**15.** Phasengesteuerte Gruppenantenne, **dadurch gekennzeichnet**, das sie ein oder mehrere Bauteile nach einem oder mehreren der Ansprüche 12 oder 13 enthält.

## Claims

**1.** Compounds of the formula I

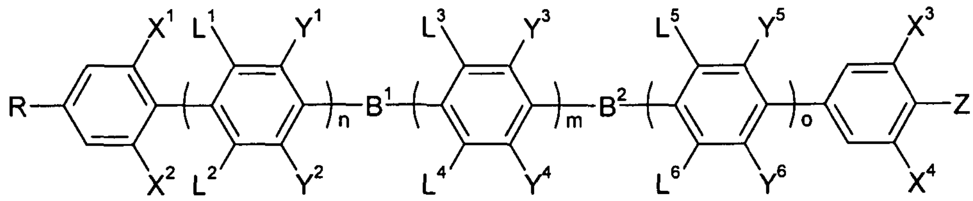

I

in which

$B^1$ denotes $-CF_2O-$, $-CH_2O-$ $-CH_2-CH_2-$, $-CF_2CF_2-$, $-CH_2CF_2-$, -CH=CH-, -CF=CF-, -CF=CH-, -C≡C-, -(CO)O-,
$B^2$ denotes $-CF_2O-$,
Z denotes F, Cl, SCN, NCS, CN, OCN, NCO, trifluoromethyl or trifluoromethoxy,
$X^{1-4}$, independently of one another, denote F, Cl or H,
$Y^{1-6}$, independently of one another, denote H, F, Cl or T,
$L^{1-6}$ independently of one another, denote H or T,
T denotes alkyl, alkoxy, alkenyl, alkenyloxy or alkynyl having up to 6 carbon atoms,
R denotes an unsubstituted alkyl radical having 1 to 15 C atoms, where, in addition, one or more $CH_2$ groups in this radical may each be replaced, independently of one another, by -C≡C-, -CH=CH-, -CF=CF-, -CF=CH-, -CH=CF-, -(CO)O-, -O(CO)-, -(CO)- or -O- in such a way that O atoms are not linked directly to one another, F, Cl, Br, CN, $CF_3$, $OCF_3$, SCN, NCS or $SF_5$,
m denotes 2, 3 or 4, and
n, o, independently of one another, denote 0, 1 or 2,

where m + n + o = 3 or 4.

**2.** Compounds according to Claim 1, **characterised in that** $B^1$ denotes a $-CF_2O-$ group.

**3.** Compounds according to Claim 1 or 2, **characterised in that** m = 2.

**4.** Compounds according to one or more of Claims 1 to 3, **characterised in that** n and o are both 1.

**5.** Compounds according to one or more of Claims 1 to 4, **characterised in that**, in the case where n = 1, m = 2 and o = 0, at least one Y or L denotes a radical T.

**6.** Liquid-crystal medium, **characterised in that** it comprises one or more compounds of the formula I according to one or more of Claims 1 to 5.

**7.** Liquid-crystal medium according to Claim 6, **characterised in that** it additionally comprises one or more compounds selected from the compounds of the formula II:

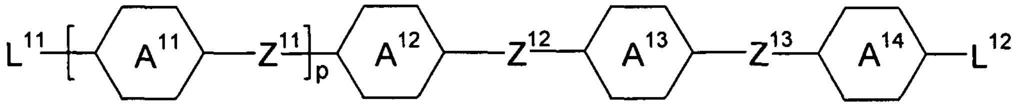

II

in which:

$L^{11}$ denotes $R^{11}$ or $X^{11}$,
$L^{12}$ denotes $R^{12}$ or $X^{12}$,
$R^{11}$ and $R^{12}$, independently of one another, denote unfluorinated alkyl or unfluorinated alkoxy having 1 to 17, preferably having 3 to 10, C atoms or unfluorinated alkenyl, unfluorinated alkenyloxy, or unfluorinated alkoxyalkyl having 2 to 15, preferably 3 to 10, C atoms,
$X^{11}$ and $X^{12}$, independently of one another, denote F, Cl, Br, -CN, -NCS, -SCN, $-SF_5$, fluorinated alkyl or fluorinated alkoxy having 1 to 7 C atoms or fluorinated alkenyl, fluorinated alkenyloxy or fluorinated alkoxyalkyl having 2 to 7 C atoms,
p denotes 0 or 1,
$Z^{11}$ to $Z^{13}$, independently of one another, denote trans-CH=CH-, *trans*-CF=CF-, -C=C- or a single bond, and

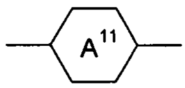 to 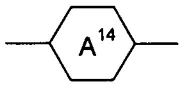 ,

independently of one another, denote a) 1,4-phenylene, in which one or more, preferably one or two, CH groups may be replaced by N, b) trans-1,4-cyclohexylene or cyclohexenylene, in which, in addition, one or two non-adjacent $CH_2$ groups may be replaced by -O- and/or -S- and in which H may be replaced by F, c) 1,4-naphthylene, and in which, in groups a) and b), one or more H atoms may also be replaced by Br, Cl, F, CN, -NCS, -SCN, $SF_5$, $C_1$-$C_{10}$ alkyl, $C_3$-$C_6$ cycloalkyl, $C_1$-$C_{10}$ alkoxy or a mono- or polyfluorinated $C_1$-$C_{10}$ alkyl or alkoxy group.

**8.** Liquid-crystal medium according to Claim 6 or 7, **characterised in that** the concentration of the compounds of the formula I in the medium is in the range from in total 5% to 95%.

**9.** Use of the compounds of the formula I according to one or more of Claims 1 to 5 in a liquid-crystalline mixture.

**10.** Use of the compounds of the formula I according to one or more of Claims 1 to 5 in a component for high-frequency technology.

**11.** Process for the preparation of a liquid-crystal medium according to one or more of Claims 6 to 8, **characterised in that** one or more compounds of the formula I are mixed with one or more compounds selected from the compounds of the formula II, as indicated in Claim 6, and optionally with one or more further compounds and optionally with one or more additives.

**12.** Component for high-frequency technology, **characterised in that** it comprises a liquid-crystal medium according to one or more of Claims 6 to 8.

**13.** Component according to Claim 12, **characterised in that** it is one or more functionally connected phase shifters.

**14.** Use of a liquid-crystal medium according to one or more of Claims 6 to 8 in a component for high-frequency technology.

**15.** Phase-controlled group antenna, **characterised in that** it comprises one or more components according to one or more of Claims 12 or 13.

**Revendications**

**1.** Composés de la formule I

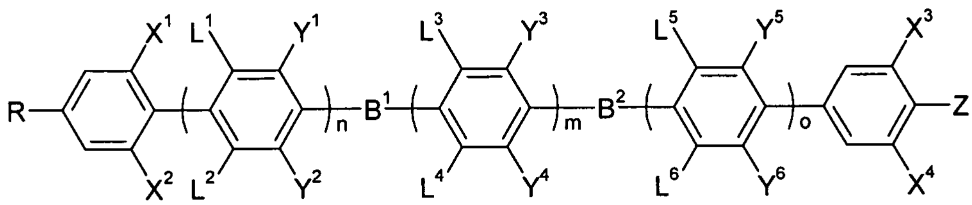

I

dans laquelle

$B^1$ représente $-CF_2O-$, $-CH_2O-$, $-CH_2-CH_2-$, $-CF_2CF_2-$, $-CH_2CF_2-$ , -CH=CH-, -CF=CF-, -CF=CH-, -C≡C-, -(CO)O-,
$B^2$ représente $-CF_2O-$,
Z représente F, Cl, SCN, NCS, CN, OCN, NCO, trifluoro- méthyle ou trifluorométhoxy,
$X^{1-4}$ représentent, indépendamment les uns des autres, F, Cl ou H,
$Y^{1-6}$ représentent, indépendamment les uns des autres, H, F, Cl ou T,
$L^{1-6}$ représentent, indépendamment les uns des autres, H ou T,
T représente alkyle, alcoxy, alkényle, alkényloxy ou alkynyle comportant jusqu'à 6 atomes de carbone,
R représente un radical alkyle non substitué comportant 1 à 15 atomes de C, où, en outre, un ou plusieurs groupes $CH_2$ dans ce radical peuvent chacun être remplacés, indépen- damment les uns des autres, par -C≡C-, -CH=CH-, -CF=CF-, -CF=CH-, -CH=CF-, -(CO)O-, -O(CO)-, -(CO)- ou -O- de telle sorte que des atomes de O ne soient pas liés directement les uns aux autres, F, Cl, Br, CN, $CF_3$, $OCF_3$, SCN, NCS ou $SF_5$,
m représente 2, 3 ou 4, et
n, o représentent, indépendamment l'un de l'autre, 0, 1 ou 2,

dans lesquels m + n + o = 3 ou 4.

2. Composés selon la revendication 1, **caractérisés en ce que** $B^1$ représente un groupe $-CF_2O-$.

3. Composés selon la revendication 1 ou 2, **caractérisés en ce que** m = 2.

4. Composés selon une ou plusieurs des revendications 1 à 3, **caractérisés en ce que** n et o valent tous deux 1.

5. Composés selon une ou plusieurs des revendications 1 à 4, **caractérisés en ce que**, dans le cas où n = 1, m = 2 et o = 0, au moins un Y ou L représente un radical T.

6. Milieu cristallin liquide, **caractérisé en ce qu'**il comprend un ou plusieurs composés de la formule I selon une ou plusieurs des revendications 1 à 5.

7. Milieu cristallin liquide selon la revendication 6, **caractérisé en ce qu'**il comprend additionnellement un ou plusieurs composés choisis parmi les composés de la formule II :

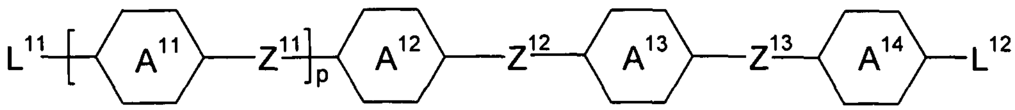

II

dans laquelle :

$L^{11}$ représente $R^{11}$ ou $X^{11}$,
$L^{12}$ représente $R^{12}$ ou $X^{12}$,
$R^{11}$ et $R^{12}$ représentent, indépendamment l'un de l'autre, alkyle non fluoré ou alcoxy non fluoré comportant 1 à 17, de préférence 3 à 10 atomes de C ou alkényle non fluoré, alkényloxy non fluoré, ou alcoxyalkyle non fluoré com- portant de 2 à 15, de préférence de 3 à 10 atomes de C,
$X^{11}$ et $X^{12}$ représentent, indépendamment l'un de l'autre, F, Cl, Br, -CN, -NCS, -SCN, $-SF_5$, alkyle fluoré ou

alcoxy fluoré comportant de 1 à 7 atomes de C ou alkényle fluoré, alkényloxy fluoré ou alcoxyalkyle fluoré comportant de 2 à 7 atomes de C,

p représente 0 ou 1,

$Z^{11}$ à $Z^{13}$ représentent, indépendamment les uns des autres, *trans*-CH=CH-, trans-CF=CF-, -C≡C- ou une liaison simple, et

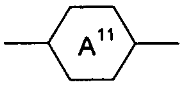 à 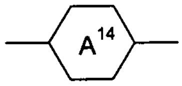 ,

représentent, indépendamment les uns des autres,

a) 1,4-phénylène, où un ou plusieurs, de préférence un ou deux groupes CH, peut/peuvent être remplacé (s) par N,
b) trans-1,4-cyclohexylène ou cyclohexénylène, où, en outre, un ou deux groupes $CH_2$ non adjacents peut/ peuvent être remplacé(s) par -O- et/ou -S- et où H peut être remplacé par F,
c) 1,4-naphthylène, et où, dans les groupes a) et b), un ou plusieurs atomes de H peut/peuvent également être rem- placé(s) par Br, Cl, F, CN, -NCS, -SCN, $SF_5$, $C_1$-$C_{10}$ alkyle, $C_3$- $C_6$ cycloalkyle, $C_1$-$C_{10}$ alcoxy ou un groupe $C_1$-$C_{10}$ alkyle ou alcoxy mono- ou polyfluoré.

**8.** Milieu cristallin liquide selon la revendication 6 ou 7, **caractérisé en ce que** la concentration des composés de la formule I dans le milieu est dans la plage de 5% à 95% au total.

**9.** Utilisation des composés de la formule I selon une ou plusieurs des revendications 1 à 5 dans un mélange de cristaux liquides.

**10.** Utilisation des composés de la formule I selon une ou plusieurs des revendications 1 à 5 dans un composant pour une technologie haute fréquence.

**11.** Procédé pour la préparation d'un milieu cristallin liquide selon une ou plusieurs des revendications 6 à 8, **caractérisé en ce qu'**un ou plusieurs des composés de la formule I est/sont mélangé(s) avec un ou plusieurs des composés choisis parmi les composés de la formule II, comme indiqué selon la revendication 6, et en option, avec un ou plusieurs autres composés et en option, avec un ou plusieurs additifs.

**12.** Composant pour une technologie haute fréquence, **caractérisé en ce qu'**il comprend un milieu cristallin liquide selon une ou plusieurs des revendications 6 à 8.

**13.** Composant selon la revendication 12, **caractérisé en ce qu'**il s'agit d'un ou de plusieurs décaleurs de phase/déphaseurs connectés fonctionnellement.

**14.** Utilisation d'un milieu cristallin liquide selon une ou plusieurs des revendications 6 à 8 dans un composant pour une technologie haute fréquence.

**15.** Antenne groupe commandée en phase, **caractérisée en ce qu'**elle comprend un ou plusieurs composants selon une ou plusieurs des revendications 12 ou 13.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- JP 2009074050 A
- WO 2008105286 A
- DE 102004029429 A
- JP 2005120208 A
- EP 1259503 B1


### In der Beschreibung aufgeführte Nicht-Patentliteratur


- **A. Gaebler ; A. Moessinger ; F. Goelden et al.** Liquid Crystal-Reconfigurable Antenna Concepts for Space Applications at Microwave and Millimeter Waves. *International Journal of Antennas and Propagation,* 2009, vol. 2009, 7
- Merck Liquid Crystals, Physical Properties of Liquid Crystals. Merck KGaA, November 1997
- **A. Penirschke ; S. Müller ; P. Scheele ; C. Weil ; M. Wittek ; C. Hock ; R. Jakoby.** Cavity Perturbation Method for Characterization of Liquid Crystals up to 35 GHz. *34th European Microwave Conference - Amsterdam,* 545-548
- **A. Gaebler ; F. Gölden ; S. Müller ; A. Penirschke ; R. Jakoby.** Direct Simulation of Material Permittivites. *12MTC 2009 - International Instrumentation and Measurement Technology Conference, Singapur,* 2009, 463-467